# EUROPÄISCHE PATENTSCHRIFT

(11) **EP 3 744 415 B1**
(45) Veröffentlichungstag und Bekanntmachung des Hinweises auf die Patenterteilung: **09.08.2023**
(21) Anmeldenummer: 20172162.8
(22) Anmeldetag: 29.04.2020
(51) Int. Cl.: B01D 46/00, B01D 46/24

(54) **LUFTFILTER**
AIR FILTER
FILTRE À AIR

(30) Priorität: 01.06.2019 DE 202019002835 U
(43) Veröffentlichungstag der Anmeldung: 02.12.2020
(73) Patentinhaber: etna GmbH, 60528 Frankfurt am Main (DE)
(72) Erfinder: Landsiedel, Kurt, 61276 Weilrod (DE)
(74) Vertreter: WSL Patentanwälte Partnerschaft mbB

(56) Entgegenhaltungen:
- WO-A1-2007/050045
- GB-A- 2 157 971
- US-A1- 2003 041 572
- US-A1- 2012 055 126

## Beschreibung

Die vorliegende Erfindung betrifft einen aus mehreren übereinander gestapelten Luftfiltern zusammengesetzten Luftfilter zur Entfernung von Feststoffpartikeln und/oder Gasen, einschließlich biologischer und chemischer Kampfstoffe sowie radioaktiver Substanzen aus der Umgebungsluft, mit einem hohlzylindrischen Gehäuse, das einen inneren Zylindermantel und einen äußeren Zylindermantel aufweist, die jeweils gasdurchlässige Zylindermäntel sind, von denen einer als Lufteinlass und der andere als Luftauslass dient, und mit zylindrischen Trennwänden, welche den Raum zwischen dem inneren und dem äußeren Zylindermantel in mehrere im Wesentlichen konzentrische, hohlzylindrische Kammern aufteilen, wobei eine näher am Lufteinlass angeordnete Kammer einen Partikelfilter umfasst und eine weitere, näher am Luftauslass angeordnete Kammer gasförmige Stoffe absorbierendes Material, wie insbesondere Aktivkohle, enthält.

Herkömmliche Luftfilter dieser Art sind dafür ausgelegt, dass mehrere der hohlzylindrischen Kammern aufeinandergestapelt werden können, wobei die hohlzylindrischen Kammern als solche stirnseitig geschlossen sind und wobei zwischen den gegenüberliegenden Stirnseiten aufeinandergestapelter, zylindrischer Kammern Dichtungen angeordnet sind. Auf diese Weise können die Filter modulartig vergrößert werden.

Derartige Luftfilter sind aber auf mindestens einer Ihrer Stirnseiten zwischen den konzentrisch zueinander angeordneten hohlzylindrischen Kammern, die das Filtermaterial enthalten, offen. Dies macht den Filter insgesamt instabil und gegen Erschütterungen empfindlich, wobei im ungünstigsten Fall die Dichtungen zwischen den schmalen Stirnseiten der einzelnen hohlzylindrischen Kammern verrutschen und damit undicht werden können, sodass ein Teil der Umgebungsluft ungefiltert an dem Lufteinlass und an dem Luftauslass vorbeitreten kann.

US 2012/0055126 A1 beschreibt einen Gaspartikelfilterbehälter mit einem Filterkanisterkörper, ersten und zweiten Behälterendkappen, die an gegenüberliegenden Enden des Filterbehälterkörpers befestigt sind, und ersten und zweiten Filterpatronen, die innerhalb des Filterbehälterkörpers zum Filtern eines Gases in Reihe gehalten werden, wobei jede der ersten und zweiten Filterpatronen ein Filterelement aufweist, das zwischen jeweiligen Patronenendkappen gehalten wird, und wobei mindestens eine der ersten oder zweiten Filterpatronen als eine Einheit aus dem Filterbehälterkörper herausnehmbar ist.

Gegenüber diesem Stand der Technik liegt der vorliegenden Erfindung die Aufgabe zu Grunde, einen Luftfilter der oben genannten Art zu schaffen, welcher einfacher handhabbar ist und eine bessere Abdichtung gegenüber einem äußeren Gehäuse und insbesondere gegenüber den Stirnseiten gleichartiger und aufeinandergestapelter Luftfilter ermöglicht.

Diese Aufgabe wird durch einen aus mehreren übereinander gestapelten Luftfiltern zusammengesetzten Luftfilter gemäß Anspruch 1 gelöst.

Die beiden Stirnseiten des Hohlzylinders sind jeweils durch eine zwischen den inneren und äußeren Zylindermänteln durchgehend geschlossene, kreisringförmige Stirnplatte verschlossen, wobei die Stirnplatten mit den inneren und äußeren Zylindermänteln und den zylindrischen Trennwänden jeweils fest und gasdicht verbunden sind.

Insgesamt bildet der Luftfilter damit einen allseitig geschlossenen Hohlzylinder, bei welchem nur der innere Zylindermantel und der äußere Zylindermantel gasdurchlässig sind, während die Stirnwände geschlossene Stirnwände sind, die von beiden Stirnseiten her die hohlzylindrischen Kammern, die mit Filtermaterial gefüllt sind, und die weiteren zwischen den Trennwänden und/oder den inneren und äußeren Zylindermänteln verbleibenden Hohlräume stirnseitig abschließen somit eine stirnseitig geschlossene Fläche des Luftfilters bilden. Gleichzeitig verbinden die Stirnplatten alle Zylindermäntel und zylindrischen Trennwände fest miteinander, so dass der Luftfilter als Ganzes eine mechanisch stabile Einheit bildet. Mehrere solche Luftfilter können als Ganzes übereinander gestapelt werden, ohne dass man jeweils die einzelnen, Filtermaterial enthaltenden hohlzylindrischen Kammern gegeneinander abdichten muss.

Die auf beiden Stirnseiten vollständig geschlossenen Luftfilter sind wegen der größeren radialen Distanz zwischen den inneren und äußeren Zylinderwänden des Hohlzylinders, die von der durchgehenden Stirnplatte überbrückt wird, wesentlich stabiler als die einzelnen hohlzylindrischen Kammern und lassen sich einfacher und sicherer aufeinander stapeln als die einzelnen Kammern.

In einer Ausführungsform ist vorgesehen, dass mindestens eine der Stirnplatten von den hohlzylindrischen Kammer leicht demontierbar ist. Insbesondere könnten die mit Filtermaterial gefüllten Kammern zwischen den beiden Stirnplatten ohne weitere Befestigungselemente eingeklemmt sein und lediglich gegen Verrutschen parallel zu den Stirnplatten gesichert sein. Die durch die Kammern voneinander beabstandeten Stirnplatten könnten dabei durch Bolzen radial innerhalb oder außerhalb der Kammern miteinander verbunden bzw. verspannt sein.

Weiterhin hat es sich als zweckmäßig erwiesen, wenn zwischen mindestens einer der Stirnplatten und mindestens einer der an diese Stirnplatte angrenzenden Kammern ein gegen das in der Kammer enthaltene Filtermaterial federnd vorgespanntes, gasundurchlässiges Dichtungsmaterial angeordnet ist. Insbesondere Filtermaterial, welches in Form eines Schüttgutes vorliegt, wie zum Beispiel Aktivkohle, kann durch Vibrationen und Erschütterungen des Luftfilters, wenn dieser beispielsweise in ein Land- oder Wasserfahrzeug eingebaut ist, verdichtet werden und damit möglicherweise nicht mehr dicht an eine entsprechende starre Stirnwand anschließen. Das federnd vorgespannte, gasundurchlässige Dichtungsmaterial übt dann eine ausreichende Vorspannung auf das Filtermaterial aus und gleicht etwaige Volumenänderungen, die durch Erschütterungen und Vibrationen hervorgerufen werden, aus, sodass Gas grundsätzlich nur durch die zylindrischen Trennwände und die Zylindermäntel sowie das Filtermaterial hindurch, nicht jedoch an diesen vorbei oder entlang der Stirnseiten der Kammern hindurchtreten kann.

Zweckmäßigerweise sind die Stirnplatten auf gegenüberliegenden Seiten des Filtermaterials identisch ausgebildet und spiegelbildlich sowie parallel zueinander angeordnet. In diesem Fall kommt es auf eine bestimmte Orientierung des Luftfilters nicht an, d.h. untere und obere Stirnseite sind austauschbar und der Filter kann in gleicher Weise in zwei um 180° zueinander gewendeten Positionen verwendet werden.

In einer Ausführungsform der Erfindung sind die inneren und äußeren Ränder der ringscheibenförmigen Stirnplatten zur Innenseite des Filters hin abgekantet. Diese abgekanteten Ränder ermöglichen eine einfache und gleichzeitig dichte Verbindung mit dem inneren bzw. dem äußeren Zylindermantel.

Gemäß der vorliegenden Erfindung weisen die Stirnplatten auf ihrer von dem Filtermaterial abgewandten Außenseite mindestens eine ringförmig umlaufende Sicke auf, die zur Aufnahme von Dichtungsringen als zur Achse des Hohlzylinders konzentrische, ringförmige Vertiefungen ausgebildet sind. In diesen Sicken sind Dichtungsringe angeordnet. So können auch wenn entsprechende Luftfilter auf beiden Seiten durch Stirnplatten geschlossen sind, dennoch mehrere derartige Filter aufeinandergestapelt werden, wobei der Zwischenraum zwischen den unmittelbar einander gegenüberliegenden Stirnseiten aufeinandergestapelter Luftfilter durch die dazwischen angeordneten Dichtringe gasdicht verschlossen ist.

Selbstverständlich wäre es auch möglich, anstelle von Sicken kleine, ringförmig umlaufende Stege vorzusehen, welche entsprechende Dichtringe in Position halten, wobei die Stege eine gegenüber den Dichtringen deutlich geringere Höhe aufweisen müssten.

In analoger Weise ist die Tiefe der Sicken so bemessen, dass sie weniger als die halbe axiale Dicke der zu verwendenden Dichtringe beträgt, sodass in zwei paarweise einander gegenüberliegenden Sicken benachbarter Stirnplatten eine Dichtung aufgenommen werden kann, welche die Stirnplatten im Übrigen auf Abstand hält und eine gute Dichtigkeit gewährleistet, wenn die übereinandergestapelten Luftfilter hinreichend fest aufeinandergedrückt werden.

Die Stirnplatten bilden bei der vorliegenden Erfindung ebene Flächen, abgesehen von den Sicken und abgekanteten Rändern, und die Sicken liegen auf jeder der Stirnplatten in einer gemeinsamen Ebene. Dabei ist die radiale Position der Sicken so gewählt, dass sie vollständig innerhalb von Begrenzungen liegen, die bezüglich einer inneren Sicke zwischen dem inneren Zylindermantel und einer inneren zylindrischen Trennwand definiert werden und bezüglich der radial äußeren Sicke durch die weiter außen liegende Trennwand und den äußeren Zylindermantel definiert werden.

Die radiale Breite der Sicken, gemessen auf Höhe ihrer halben Tiefe sollte gemäß einer Ausführungsform mindestens das Dreifache der Tiefe der Sicken, gemessen von der ebenen Außenfläche der Stirnplatte zum Grund der jeweiligen Sicken, betragen.

Die Zahl der Trennwände wird zweckmäßigerweise so gewählt, dass jedes der Filtermaterialien individuell sowohl auf seiner radial inneren als auch auf seiner radial äußeren Seite jeweils durch eine zylindrische, gasdurchlässige Wand eingekapselt ist, wobei eine dieser Wände durch den inneren oder äußeren Zylindermantel und eine dieser Wände durch die innere bzw. äußere Trennwand gebildet wird, wobei für die Aufnahme zusätzlicher Filtermaterialien auch weitere hohlzylindrische Kammern zwischen den genannten Trennwänden angeordnet sein könnten.

Mindestens eine dieser gasdurchlässigen Wände könnte gemäß einer Ausführungsform als Lochwand ausgebildet sein und insbesondere aus Metall, insbesondere aus einem Streckmetallgitter, bestehen.

Unter einem Streckmetallgitter versteht man eine dünne Metallplatte oder ein Metallblech, welches in parallelen Reihen wechselseitig zueinander versetzte, kurze Schlitze aufweist, sodass die Enden des Bleches senkrecht zum Verlauf der Schlitze auseinandergezogen werden können und die Schlitze dann annähernd rautenförmige Hohlräume bilden.

Mindestens eine der Lochwände, insbesondere die innere und/oder äußere Zylindermantelwand, ist mit dem abgekanteten Rand mindestens einer der Stirnplatten verschraubt, vernietet oder verschweißt, wobei es an dieser Position auf eine gasdichte Verbindung nicht ankommt, solange nur das Filtermaterial, gegebenenfalls über eine vorgespannte gasundurchlässige Dichtung, an den dem Filtermaterial gegenüberliegenden Seiten der Stirnplatten dicht anliegt.

Zur Verbindung der Trennwände mit den Stirnplatten könnten jeweils im Profil L-förmige Winkelringe mit der Innenseite der Stirnplatte verbunden, insbesondere verschweißt oder angeklebt sein. Ein sich dann vertikal erstreckender, ringförmig umlaufender Schenkel eines solchen Winkelrings könnte wieder mit einer der Trennwände durch Nieten oder Schweißen oder auch Verkleben verbunden werden.

In einer Ausführungsform der vorliegenden Erfindung ist der innere Zylindermantel des Hohlzylinders als Lufteinlass und der äußere Zylindermantel des Hohlzylinders als Luftauslass vorgesehen. Die gegebenenfalls verunreinigte Umgebungsluft tritt also durch die zentralen, zylindrischen Öffnungen des Hohlzylinders ein, durch den Zylindermantel und die innere Trennwand sowie das dazwischenliegende Filtermaterial hindurch und weiter durch die äußere zylindrische Trennwand, das weitere Filtermaterial und schließlich die äußere Zylindermantelwand wieder aus und sollte danach von allen unerwünschten Verunreinigungen und für Menschen gefährlichen Stoffen frei sein.

Die Erfindung betrifft einen Luftfilter, der aus mehreren der vorstehend einzeln für sich beschriebenen Luftfiltern besteht, die entlang ihrer gemeinsamen Achse angeordnet und übereinandergestapelt sind, wobei in den Sicken unmittelbar nebeneinanderliegender Stirnplatten Dichtungsringe liegen, deren senkrecht zur Plattenebene gemessener Querschnittsdurchmesser mehr als das Doppelte, vorzugsweise mindestens das Dreifache der Tiefe einer Sicke beträgt, sodass die in beiden Sicken einander gegenüberliegender Stirnplatten aufgenommene Dichtungen diese Stirnplatten parallel im Abstand zueinander halten und gegeneinander abdichten. Dabei können die Dichtungsringe jeweils an einer der Stirnplatten in einer Sicke fixiert sein.

Weitere Vorteile, Merkmale und Anwendungsmöglichkeiten der vorliegenden Erfindung werden deutlich anhand der Beschreibung einer bevorzugten Ausführungsform und der dazugehörigen Figuren. Es zeigen:
- Figur 1: in der rechten Hälfte eine Außenansicht und in der linken Hälfte einen axialen Schnitt durch einen erfindungsgemäßen Luftfilter,
- Figur 2 a bis c: eine Draufsicht auf eine Stirnplatte sowie eine Stirnplatte in einem axialen Schnitt und eine Ausschnittvergrößerung aus Figur 2b.
- Figur 3: zeigt nochmals einen schematischen axialen Schnitt durch einen inneren Filter.

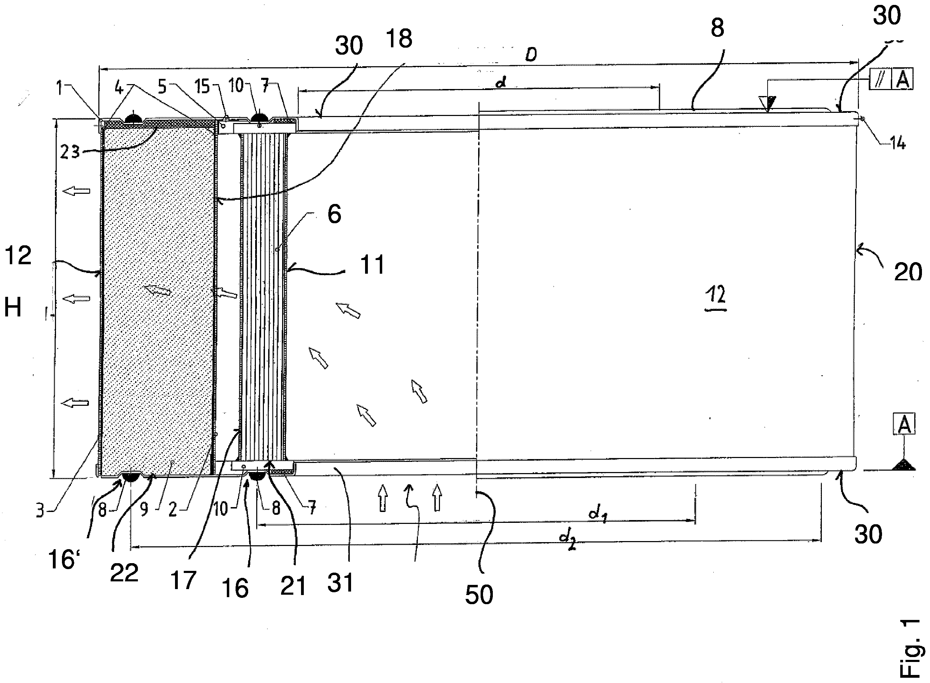

Im rechten Teilbild der Figur 1 erkennt man die Außenansicht eines Hohlzylinders 20 mit einer äußeren Zylindermantelwand 12 und einer ringscheibenförmigen oberen Stirnplatte 30 sowie einer identischen **unteren Stirnplatte 30',** die gegenüber der Stirnplatte 30 um 180° gewendet ist. Je eine Dichtung 8 ragt axial nach oben über die obere Stirnplatte 30 bzw. nach unten über die untere Stirnplatte **30'** hinaus.

In der linken Hälfte der Figur 1 erkennt man den inneren Aufbau des Luftfilters. Ausgehend von der Achse 50 wird die Innenwand eines Hohlzylinders 20 gebildet durch eine innere Zylinderwand 11, die gasdurchlässig ist und das Äußere des Hohlzylinders 20 wird gebildet durch eine ebenfalls gasdurchlässige äußere Zylindermantelwand 12.

Zusammen mit einer zylindrischen Trennwand 17, deren Radius größer ist als das des inneren Zylindermantels 11, bildet dieser Zylindermantel 11 eine hohlzylindrische Kammer 21, die mit einem Filtermaterial 6 gefüllt ist, in diesem Fall einem Material, welches als Schwebstofffilter dient. Die Stirnseiten dieser Kammer 21 sind durch eine Schicht bzw. Ringscheibe 10 aus Butylkautschuk verschlossen, die an den Innenseiten der einander gegenüberliegenden Sicken 16 anliegt, wobei zusätzlich noch eine elastische Dichtung 7 zwischen dem Ring aus Butylkautschuk und der ebenen Innenfläche der Stirnplatte 30 bzw. 30' angeordnet ist. In ähnlicher Weise wird eine weitere hohlzylindrische Kammer 22 gebildet durch eine äußere Trennwand 18, deren Radius wiederum größer ist als der Radius der inneren Trennwand 17, jedoch kleiner ist als der Radius des äußeren Zylindermantels 12, welcher die Kammer 22 nach außen begrenzt. Diese Kammer ist mit einem Filtermaterial gefüllt, welches insbesondere auch gasförmige Schad- und Giftstoffe aufnimmt und aus der Umgebungsluft herausfiltert. Dabei kann es sich insbesondere um Aktivkohle 9 handeln.

Wie aus Figur 1 hervorgeht, in welcher der den Filter durchströmende Luftstrom durch Pfeile angedeutet ist, durchströmt die zu filternde Luft nacheinander den inneren Zylindermantel 11, das in der inneren Kammer 21 angeordnete Filtermaterial 6, die innere Trennwand 17, den Zwischenraum zwischen der inneren Trennwand 17 und der äußeren Trennwand 18, die äußere Trennwand 18, das Filtermaterial 9 der äu ßeren Kammer 22 und tritt schließlich durch den äu ßeren Zylindermantel 12 aus.

Eine der Stirnseiten dieser Aktivkohleschicht steht in engem Kontakt mit einem elastisch vorgespannten Dichtungsmaterial 23, welches aufgrund seiner elastischen Vorspannung immer in engem Kontakt mit der Aktivkohle 9 bleibt, auch wenn das von der Aktivkohle 9 eingenommene Volumen aufgrund von Erschütterungen und Vibrationen etwas abnimmt. Die elastische Dehnfähigkeit des Dichtungsmaterials 23 und auch die axiale Dicke dieses Dichtungsmaterials 23 wird auf die maximale Komprimierbarkeit des Aktivkohlematerials 9 abgestimmt, sodass der dichte Kontakt zwischen dem Material 23 und dem Aktivkohlematerial 9 unter allen Umständen erhalten bleibt.

Analoges gilt selbstverständlich auch für die innere Kammer 21 mit dem Filtermaterial 6 und den Dichtungen 10, wobei das Dichtungsmaterial 6 aber so gewählt werden kann, dass es im Betrieb des Luftfilters und auch bei Erschütterungen nicht an Volumen verliert. Bei dem Schwebstofffiltermaterial 6 kann es sich insbesondere um ein eng gepacktes Glasvlies handeln.

Ein wesentlicher Aspekt der Erfindung liegt in der Ausgestaltung der beiden Stirnwände, welche stirnseitig sowohl die beiden Hohlkammern 21 und 22 als auch den Zwischenraum zwischen diesen Kammern abschließt.

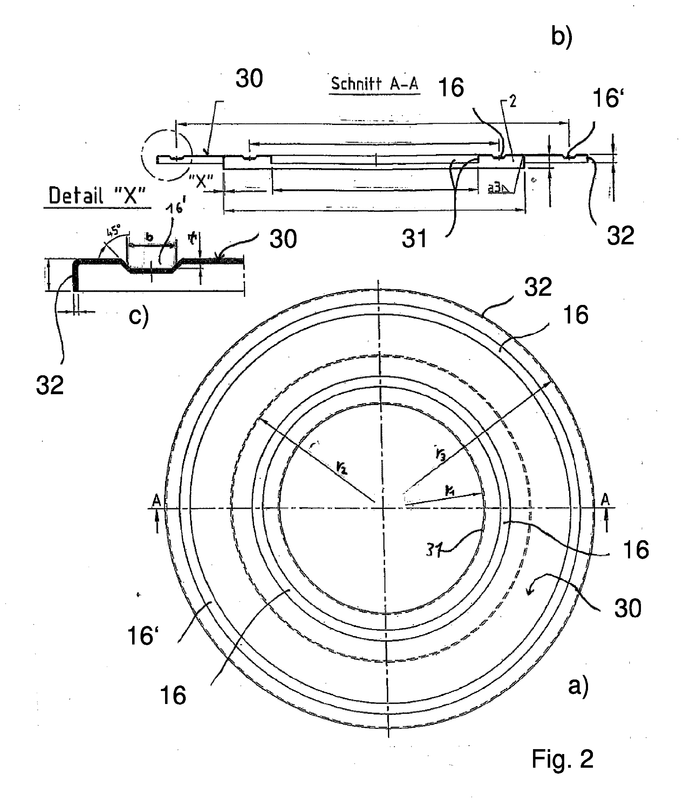

Die entsprechende ringscheibenförmige Stirnplatte **30 bzw. 30'** ist getrennt in Figur 2 und in verschiedenen Ansichten dargestellt, wobei Figur 2a eine ebene Draufsicht von oben auf die **Stirnplatte 30 (bzw. von unten auf die Stirnplatte 30') ist.** **Figur 2b** **zeigt einen axialen Schnitt durch** die Stirnplatte 30 entsprechend der Schnittlinie A-A und Figur 2c zeigt wiederum ein Detail aus Figur 2b.

Wie man in Figur 2b erkennt, ist die Stirnplatte 30 eine im Wesentlichen ebene, ringscheibenförmige Stirnplatte, mit abgekanteten inneren und äußeren Rändern 31, 32, einer dazwischenliegenden ebenen Ringfläche 1 und zwei in radialem Abstand in dieser ebenen Ringfläche 1 vorgesehenen und kreisförmig umlaufenden Sicken 16, **16'.** Zusätzlich erkennt man in Figur 2b noch den vertikalen Schenkel eines umlaufenden Winkelringes 5, der zur Befestigung einer inneren Trennwand dient.

In der Draufsicht gemäß Figur 2a erkennt man die ringscheibenförmige Stirnplatte 30 mit einem Innenradius r₁, der durch den inneren abgekanteten Rand 31 gebildet wird und einem äußeren Radius r₃, der durch den äußeren abgekanteten Rand 32 definiert wird. Der Radius r₂ bezeichnet die Position des vertikalen Schenkels des Winkelringes 5, an dem die äußere Trennwand 18 befestigt ist.

### Weiterhin erkennt man noch die inneren und äußeren Sicken 16 bzw. 16'.

Die Detailvergrößerung aus Figur 2b, welche in Figur 2c dargestellt ist, zeigt genauer die **Ausgestaltung einer Sicke 16 bzw. 16' mit einer Tiefe t, die von der Oberfläche der Stirnplatte 30 bis zu dem (in diesem Fall ebenen) Grund der Sicke 16' gemessen** wird und einer Breite b, die genau auf Höhe der halben Tiefe t gemessen wird. Der Querschnitt der Sicke 16 ist trapezförmig **mit Flankenwinkeln von 45°, wobei es aber auf die genaue Ausgestaltung der Sicke 16 bzw. 16'** nicht ankommt, solange nur die in einer solchen Sicke aufzunehmenden Dichtungen einen in axialer Richtung gemessenen Durchmesser haben, der größer ist als das Doppelte der Tiefe t der **Sicken 16, 16'.**

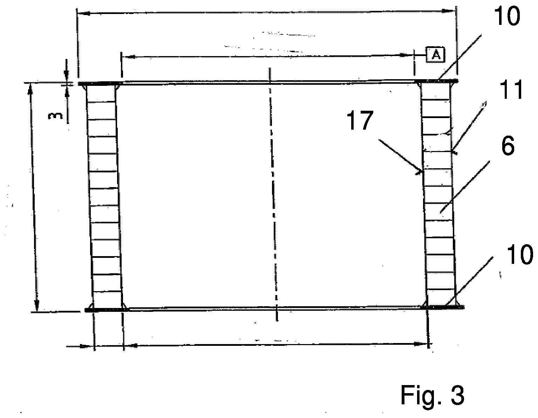

Figur 3 zeigt schließlich noch die radial innere Filtereinheit für Schwebstoffe, die in dieser Form mit stirnseitigen Dichtungen 10 aus Butylkautschuk vorgefertigt sein kann, die auch gleichzeitig als Fixierungen für die innere Zylindermantelwand 11 und die innere Trennwand 17 dienen und beispielsweise mit diesen zylindrischen Wänden verklebt sind.

**Bei dem Zusammenbau eines entsprechenden Luftfilters kann zum Beispiel eine Stirnwand 30' als** Bodenplatte verwendet werden, an deren Winkelring 5 die äußere Trennwand 18 befestigt wird, während die äußere Zylindermantelwand an dem abgekanteten Rand 32 befestigt wird. Außerdem wird der vorgefertigte Schwebstofffilter, bestehend aus innerer Zylinderwand, innerer Trennwand 17 **sowie den Dichtungselementen 10, auf die untere Stirnplatte 30' aufgesetzt, wobei die** Durchmesser bzw. Radien so bemessen sind, dass die Dichtungsringe 10 dicht an dem abgekanteten Rand 31 anliegen. Anschließend kann die Hohlkammer 22 mit einem geeigneten Filtermaterial, wie zum Beispiel Aktivkohle, gefüllt werden, wird durch Rütteln verdichtet und schließlich wird noch eine ebenfalls ringscheibenförmige, elastische Dichtungsschicht 23 auf das Filtermaterial 9 aufgelegt und ragt dabei axial im Allgemeinen über das Maß hinaus, welches später durch die Außenseite der oberen Stirnplatte 30 definiert wird.

Dann wird die obere Stirnplatte 30 aufgesetzt, die obere Dichtung 10 tritt mit dem elastischen Filter 7 und dem inneren abgekanteten Rand 31 in Eingriff und die obere Stirnplatte drückt das elastische Dichtungsmaterial 23 so weit zusammen, dass eine gewünschte Endposition erreicht wird, diese Endposition kann beispielsweise durch den Anschlag der äußeren Trennwand 18 und/oder der äußeren Zylinderwand 12 an der Innenfläche der Stirnplatte 30 definiert sein.

Die Verbindung zwischen den zylindrischen Innen- und Außenwänden (11, 12) und den **abgekanteten Rändern 31, 32 der Stirnplatten 30, 30' könnte zum Beispiel eine Art** Bajonettverbindung sein, die einerseits eine sichere, sich nicht selbststätig lösende Verbindung liefert und andererseits leicht lösbar ist, wobei die zylindrischen Innen- und Außenwände 11, 12 **die Stirnplatten 30, 30' fest zusammenhalten**.

**In den Sicken 16, 16' der Stirnplatte 30 und auch der bodenseitigen Stirnplatte 30' sind im** Querschnitt halbkreisförmige Dichtungsringe 8 eingeklebt, die so bemessen sind, dass sie um mehr als die Tiefe der Sicke noch über die obere ebene Fläche der Stirnplatten 30 bzw. analog der **unteren Stirnplatte 30' hinausragen. In der dargestellten Ausführungsform sind beide Stirnplatten 30, 30' mit Dichtringen 8 in den Sicken 16, 16' versehen und der** Filter könnte in dieser Form allein in einem entsprechenden äußeren Gehäuse eingebaut werden.

Falls mehrere derartige Luftfilter zu einem größeren Luftfilter kombiniert und aufeinandergestapelt werden sollen, benötigt nur einer der aufeinanderzustapelnden Luftfilter entsprechende Dichtungen auf beiden Seiten, während die übrigen Filter mit den Dichtungen 8 auf einer der Stirnplatten 30, 31 auskommen, um den Stapel insgesamt sowohl zwischen den einzelnen Hohlzylindern 20 als auch gegenüber einem äußeren Gehäuse abdichten zu können.

## Patentansprüche

1. Zusammengesetzter Luftfilter zur Entfernung von Feststoffpartikeln und/oder Gasen, einschließlich biologischer und chemischer Kampfstoffe sowie radioaktiver Substanzen aus der Umgebungsluft, wobei der zusammengesetzte Luftfilter zusammengesetzt ist aus mehreren übereinander gestapelten Luftfiltern mit
- einem hohlzylindrischen Gehäuse (20), das einen inneren Zylindermantel (11) und einen äußeren Zylindermantel (12) aufweist, die jeweils gasdurchlässige Zylindermäntel sind, von denen einer als Lufteinlass und der andere als Luftauslass dient,
- zylindrischen Trennwänden (17, 18), welche den Raum zwischen dem inneren und dem äußeren Zylindermantel (11, 12), in im Wesentlichen konzentrische, hohlzylindrische Kammern (21, 22) aufteilen, wobei eine näher zum Lufteinlass orientierte Kammer (21) einen Partikelfilter (6) umfasst und eine weitere, näher zum Luftauslass orientierte Kammer (22) gasförmige Stoffe absorbierendes Material, wie insbesondere Aktivkohle (9), enthält,
wobei beide Stirnseiten des Hohlzylinders jeweils durch eine durchgehende, kreisringförmige Stirnplatte (30, 30') verschlossen sind, wobei die Stirnplatten (30, 30') mit den inneren und äußeren Zylindermänteln (11, 12) und den zylindrischen Trennwänden (17, 18) jeweils fest und gasdicht verbunden sind,
**dadurch gekennzeichnet, dass**
- die Stirnplatten (30, 30') auf ihrer von dem Filtermaterial abgewandten Außenseite mindestens eine ringförmig umlaufende Sicke (16) aufweisen, die zur Aufnahme von Dichtungsringen als zur Achse des Hohlzylinders konzentrische, ringförmige Vertiefungen ausgebildet sind,
- die Sicken (16) auf gegenüberliegenden Stirnplatten (30, 30') auf demselben Radius bezüglich der Achse (50) des hohlzylindrischen Gehäuses angeordnet sind,
- die Stirnplatten (30, 30'), abgesehen von den Sicken (16), ebene Flächen (35) bilden,
- die Sicken (16) auf jeder der Stirnplatten (30, 30') in einer gemeinsamen Ebene liegen, und
- in den Sicken (16) unmittelbar nebeneinanderliegender Stirnplatten (30, 30') Dichtungsringe (8) liegen, deren senkrecht zur Plattenebene gemessener Querschnittsdurchmesser mehr als das Doppelte der Tiefe einer Sicke beträgt, so dass die in beiden Sicken einander gegenüberliegender Stirnplatten aufgenommenen Dichtungen die Stirnplatten parallel im Abstand zueinander halten.

2. Zusammengesetzter Luftfilter nach Anspruch 1, **dadurch gekennzeichnet, dass** zwischen mindestens einer der Stirnplatten (30, 30') und mindestens einer der an diese Stirnplatte (30, 30') angrenzenden Kammern (21, 22) ein gegen das in der Kammer (22) enthaltende Filtermaterial federnd vorgespanntes, gasundurchlässiges Dichtungsmaterial (23) angeordnet ist.

3. Zusammengesetzter Luftfilter nach einem der vorstehenden Ansprüche, **dadurch gekennzeichnet, dass** die Stirnplatten (30, 30') auf gegenüberliegenden Seiten des Filtermaterials identisch ausgebildet und spiegelbildlich sowie parallel zueinander angeordnet sind.

4. Zusammengesetzter Luftfilter nach einem der vorstehenden Ansprüche, **dadurch gekennzeichnet, dass** die inneren und äußeren Ränder (31, 32) der ringförmigen Stirnplatten (30, 30') zur Innenseite des Filters hin abgekantet sind.

5. Zusammengesetzter Luftfilter nach einem der vorstehenden Ansprüche, **dadurch gekennzeichnet, dass** die radiale Breite (b) der Sicken (16), gemessen auf Höhe ihrer halben Tiefe (t), mindestens das Dreifache der Tiefe (t) beträgt.

6. Zusammengesetzter Luftfilter nach einem der vorstehenden Ansprüche, **dadurch gekennzeichnet, dass** jedes der Filtermaterialien sowohl auf seiner radial inneren als auch auf seiner radial äußeren Seite, durch eine zylindrische gasdurchlässige Wand (11, 17; 12, 18) eingekapselt ist.

7. Zusammengesetzter Luftfilter nach einem der vorstehenden Ansprüche, **dadurch gekennzeichnet, dass** mindestens eine der gasdurchlässigen Wände (11, 12, 17, 18) als Lochwand ausgebildet ist und vorzugsweise aus Metall, insbesondere aus einem Streckmetallgitter besteht

8. Zusammengesetzter Luftfilter nach Anspruch 7, **dadurch gekennzeichnet, dass** mindestens eine Lochwand (12) mit dem abgekanteten Rand mindestens einer der Stirnplatten (30, 30') vernietet oder verschweißt ist.

9. Zusammengesetzter Luftfilter nach einem der vorstehenden Ansprüche, **dadurch gekennzeichnet, dass** die zylindrischen Trennwände (17, 18) mindestens teilweise über einen oder mehrere, im Profil L-förmige Winkelringe (5) mit der Innenseite der Stirnplatte (30, 30') verbunden sind.

10. Zusammengesetzter Luftfilter nach einem der vorstehenden Ansprüche, **dadurch gekennzeichnet, dass** der innere Zylindermantel (11) des Hohlzylinders als Lufteinlass und der äußere Zylindermantel des Hohlzylinders als Luftauslass vorgesehen sind.

11. Zusammengesetzter Luftfilter nach einem der vorstehenden Ansprüche, **dadurch gekennzeichnet, dass** die Dichtungsringe (8) jeweils an einer der Stirnplatten (30, 30') fixiert sind.

12. Zusammengesetzter Luftfilter nach einem der vorstehenden Ansprüche, **dadurch gekennzeichnet, dass** die Stirnpatten (30, 30') miteinander verspannt sind.

13. Zusammengesetzter Luftfilter nach einem der vorstehenden Ansprüche, **dadurch gekennzeichnet, dass** die zylindrischen Innen- und Außenwände (11, 12) die auf beiden Stirnseiten eines Luftfilters angeordneten Stirnplatten (30, 30') zusammenhalten bzw. miteinander verspannen.

14. Zusammengesetzter Luftfilter nach einem der vorstehenden Ansprüche, **dadurch gekennzeichnet, dass** die inneren und äußeren Ränder (31, 32) der ringförmigen Stirnplatten (30, 30') zur Innenseite des Filters hin abgekantet sind und die zylindrischen Innen und Außenwände (11, 12) die auf beiden Stirnseiten eines Luftfilters angeordneten Stirnplatten (30, 30') über eine Bajonettverbindung zwischen den inneren und äußeren abgekanteten Rändern (31, 32) und den inneren und äußeren Zylindermänteln (11, 12) zusammenhalten bzw. miteinander verspannen.

15. Zusammengesetzter Luftfilter nach einem der vorstehenden Ansprüche, **dadurch gekennzeichnet, dass** in den Sicken (16) unmittelbar nebeneinanderliegender Stirnplatten (30, 30') Dichtungsringe (8) liegen, deren senkrecht zur Plattenebene gemessener Querschnittsdurchmesser mindestens das Dreifache der Tiefe einer Sicke beträgt.

## Claims

1. An assembled air filter for removing solid particles and/or gases, including biological and chemical warfare agents and radioactive substances, from ambient air, said assembled air filter being composed of a plurality of air filters stacked one on top of the other and comprising
- a hollow cylindrical housing (20) having an inner cylindrical shell (11) and an outer cylindrical shell (12), each of which are gas-permeable cylindrical shells, one of which serves as an air inlet and the other of which serves as an air outlet,
- cylindrical partition walls (17, 18) which divide the space between the inner and outer cylinder jackets (11, 12) into substantially concentric, hollow cylindrical chambers (21, 22), wherein a chamber (21) oriented closer to the air inlet comprises a particle filter (6) and a further chamber (22) oriented closer to the air outlet contains a material for absorbing gaseous substances, such as in particular activated carbon (9),
wherein both end faces of the hollow cylinder are each closed by a continuous, annular end plate (30, 30'), wherein the end plates (30, 30') are each connected in a fixed and gas-tight manner to the inner and outer cylinder shells (11, 12) and to the cylindrical partition walls (17, 18)
**characterised in that**
- the end plates (30, 30') have, on their outer side facing away from the filter material, at least one annular circumferential beading (16) which, for receiving sealing rings, are designed as annular depressions concentric with the axis of the hollow cylinder,
- the headings (16) are arranged on opposite end plates (30, 30') on the same radius with respect to the axis (50) of the hollow cylindrical housing,
- the end plates (30, 30'), apart from the headings (16), form flat surfaces (35),
- the headings (16) on each of the end plates (30, 30') lie in a common plane, and
- in the headings (16) of immediately adjacent end plates (30, 30') lie sealing rings (8) whose cross-sectional diameter measured perpendicular to the plate plane is more than twice the depth of a beading, so that the seals received in both headings of opposing end plates keep the end plates parallel and spaced apart from each other.

2. Assembled air filter according to claim 1, **characterized in that** a gas-impermeable sealing material (23) resiliently pre-stressed against the filter material contained in the chamber (22) is arranged between at least one of the end plates (30, 30') and at least one of the chambers (21, 22) adjacent to this end plate (30, 30').

3. Assembled air filter according to one of the preceding claims, **characterized in that** the end plates (30, 30') on opposite sides of the filter material are identically formed and arranged mirror-inverted and parallel to each other.

4. Assembled air filter according to one of the preceding claims, **characterized in that** the inner and outer edges (31, 32) of the annular end plates (30, 30') are bevelled towards the inside of the filter.

5. Assembled air filter according to one of the preceding claims, **characterized in that** the radial width (b) of the headings (16), measured at the level of their half depth (t), is at least three times the depth (t).

6. Assembled air filter according to one of the preceding claims, **characterized in that** each of the filter materials is encapsulated, both on its radially inner and on its radially outer side, by a cylindrical gas-permeable wall (11, 17; 12, 18).

7. Assembled air filter according to one of the preceding claims, **characterized in that** at least one of the gas-permeable walls (11, 12, 17, 18) is formed as a perforated wall and preferably consists of metal, in particular of an expanded metal mesh.

8. Assembled air filter according to claim 7, **characterized in that** at least one perforated wall (12) is riveted or welded to the bevelled edge of at least one of the end plates (30, 30').

9. Assembled air filter according to one of the preceding claims, **characterized in that** the cylindrical partition walls (17, 18) are at least partially connected to the inner side of the end plate (30, 30') via one or more angular rings (5) which are L-shaped in profile.

10. Assembled air filter according to one of the preceding claims, **characterized in that** the inner cylinder shell (11) of the hollow cylinder is provided as air inlet and the outer cylinder shell of the hollow cylinder is provided as air outlet.

11. Assembled air filter according to one of the preceding claims, **characterised in that** the sealing rings (8) are each fixed to one of the end plates (30, 30').

12. Assembled air filter according to one of the preceding claims, **characterised in that** the end plates (30, 30') are tightened to one another.

13. Assembled air filter according to one of the preceding claims, **characterized in that** the cylindrical inner and outer walls (11, 12) hold together or tighten together the end plates (30, 30') arranged on both end faces of an air filter.

14. Assembled air filter according to one of the preceding claims, **characterized in that** the inner and outer edges (31, 32) of the annular end plates (30, 30') are bevelled towards the inside of the filter and the cylindrical inner and outer walls (11, 12) hold together or tighten to one another the end plates (30, 30') arranged on both end faces of an air filter via a bayonet connection between the inner and outer bevelled edges (31, 32) and the inner and outer cylindrical jackets (11, 12).

15. Assembled air filter according to one of the preceding claims, **characterised in that** sealing rings (8) are located in the headings (16) of immediately adjacent end plates (30, 30'), the cross-sectional diameter of which, measured perpendicularly to the plate plane, is at least three times the depth of a beading.

## Revendications

1. Filtre à air composé pour retirer de l'air ambiant, des particules solides et/ou des gaz, y compris des armes biologiques et chimiques de combat, ainsi que des substances radioactives, le filtre à air composé étant composé de plusieurs filtres à air empilés les uns sur les autres et comprenant
- un boîtier cylindrique creux (20) qui comprend une enveloppe cylindrique intérieure (11) et une enveloppe cylindrique extérieure (12) qui sont des enveloppes cylindriques perméables au gaz dont une sert comme entrée d'air et l'autre sert comme sortie d'air,
- des parois de séparation cylindriques (17, 18) qui divisent l'espace entre les enveloppes cylindriques intérieure et extérieure (11, 12) en des chambres cylindriques creux essentiellement coaxiales (21, 22), une chambre (21) orientée plus proche vers l'entrée d'air comprenant un filtre à particules (6) et une autre chambre (22) orientée davantage vers la sortie d'air, comprenant une matière absorbant des matières en forme de gaz, notamment du charbon actif (9),
chacune des deux faces frontales du cylindre creux étant fermés par une plaque frontale continue (30, 30') de forme annulaire, les plaques frontales (30, 30') étant attachées chacune fermement et de façon étanche au gaz, aux enveloppes intérieure et extérieure (11, 12) et aux parois de séparation cylindriques (17, 18),
**caractérisé en ce que**
- les plaques frontales (30, 30') comprennent sur la face extérieure détournée de la matière de filtration, au moins une ondulation (16) circonférentielle en forme d'anneau qui est (sont) formée(s), afin de recevoir des joints d'étanchéité, comme des enfoncements en forme d'anneaux concentriques à l'axe du cylindre creux,
- les ondulations (16) sont disposées sur des plaques frontales (30, 30') en regard sur le même rayon par rapport à l'axe (50) du boîtier cylindrique creux,
- les plaques frontales (30, 30') forment, à l'exception des ondulations (16), des surfaces planes (35),
- les ondulations (16) sont disposées sur chacune des plaques frontales (30, 30') sur un plan commun et
- dans les ondulations (16) de plaques frontales (30, 30') disposées directement les unes à côté des autres, des joints d'étanchéité (8) sont disposés dont le diamètre de section transversale mesuré perpendiculairement au plan des plaques, est plus que le double de la profondeur d'une ondulation, de sorte que les joints d'étanchéité reçus dans les deux ondulations de plaques frontales en regard maintiennent les plaques frontales parallèlement à distance.

2. Filtre à air composé selon la revendication 1, **caractérisé en ce qu'**une matière d'étanchéité (23) imperméable aux gaz et élastiquement précontrainte par rapport à la matière de filtration contenue dans la chambre (22), est disposée entre au moins une des plaques frontales (30, 30') et au moins une des chambres (21, 22) adjacentes à cette plaque frontale (30, 30').

3. Filtre à air composé selon l'une des revendications précédentes, **caractérisé en ce que** les plaques frontales (30, 30') sont formées de façon identique sur des côtés en regard de la matière de filtration et disposées de façon symétrique et parallèlement l'une à l'autre.

4. Filtre à air composé selon l'une des revendications précédentes, **caractérisé en ce que** les bords intérieurs et extérieurs (31, 32) des plaques frontales (30, 30') en forme d'anneaux sont repliées vers le côté intérieur du filtre.

5. Filtre à air composé selon l'une des revendications précédentes, **caractérisé en ce que** la largeur radiale (b) des ondulations (16), mesurée à hauteur de la moitié de leur profondeur (t), est au moins le triple de la profondeur (t).

6. Filtre à air composé selon l'une des revendications précédentes, **caractérisé en ce que** chacune des matières de filtration est encapsulée aussi bien sur son côté radialement intérieur que sur son côté radialement extérieur, par une paroi (11, 17 ; 12, 18) cylindrique perméable aux gaz.

7. Filtre à air composé selon l'une des revendications précédentes, **caractérisé en ce qu'**au moins une des parois (11, 12, 17, 18) perméable aux gaz est configurée comme une paroi perforée (12) et est fait de préférence en métal, notamment en une grille en métal déployé.

8. Filtre à air composé selon la revendication 7, **caractérisé en ce qu'**au moins une paroi perforée (12) est rivetée ou soudée au bord replié d'au moins une des plaques frontales (30, 30').

9. Filtre à air composé selon l'une des revendications précédentes, **caractérisé en ce que** les parois de séparation cylindriques (17, 18) sont attachées au moins partiellement, par le biais d'un ou de plusieurs anneaux angulaires (5) à profil en L, à la face intérieure de la plaque frontale (30, 30').

10. Filtre à air composé selon l'une des revendications précédentes, **caractérisé en ce que** l'enveloppe cylindrique intérieure (11) du cylindre creux est prévue comme entrée d'air et que l'enveloppe cylindrique extérieure du cylindre creux est prévue comme sortie d'air.

11. Filtre à air composé selon l'une des revendications précédentes, **caractérisé en ce que** les joints d'étanchéité (8) sont fixés respectivement à une des plaques frontales (30, 30').

12. Filtre à air composé selon l'une des revendications précédentes, **caractérisé en ce que** les plaques frontales (30, 30') sont serrées entre elles.

13. Filtre à air composé selon l'une des revendications précédentes, **caractérisé en ce que** les parois cylindriques intérieures et extérieures (11, 12) serrent ou maintiennent ensemble les plaques frontales (30, 30') disposées sur les deux faces frontales d'un filtre à air.

14. Filtre à air composé selon l'une des revendications précédentes, **caractérisé en ce que** les bords intérieurs et extérieurs (31, 32) des plaques frontales (30, 30') en forme d'anneau sont repliés vers la face intérieure du filtre et maintiennent ou serrent ensemble les plaques frontales (30, 30') disposées sur les deux faces frontales d'un filtre à air moyennant une liaison à baïonnette entre les bords repliés intérieurs et extérieurs (31, 32) et les enveloppes cylindriques intérieures et extérieures (11, 12).

15. Filtre à air composé selon l'une des revendications précédentes, **caractérisé en ce que**, dans les ondulations (16) de plaques frontales (30, 30') directement adjacentes, des joints d'étanchéité (8) sont posés dont le diamètre de section transversale, mesuré perpendiculairement au plan de plaque, est au moins le triple de la profondeur d'une ondulation.
